# EUROPÄISCHE PATENTSCHRIFT

(11) **EP 1 521 211 B1**
(45) Veröffentlichungstag und Bekanntmachung des Hinweises auf die Patenterteilung: **15.06.2011**
(21) Anmeldenummer: 04023006.2
(22) Anmeldetag: 28.09.2004
(51) Int. Cl.: G06T 7/00

(54) **Verfahren und Vorrichtung zum Bestimmen von Position und Orientierung einer Bildempfangseinrichtung**
Method and apparatus for determining the position and orientation of an image receiving device
Procédé et processus pour déterminer la position et l'orientation d'un récepteur d'images

(30) Priorität: 01.10.2003 DE 10345743
(43) Veröffentlichungstag der Anmeldung: 06.04.2005
(73) Patentinhaber: KUKA Laboratories GmbH, 86165 Augsburg (DE)
(72) Erfinder: Kazi, Arif, 86150 Augsburg (DE); Bischoff, Rainer, 86163 Augsburg (DE)
(74) Vertreter: Schlotter, Alexander Carolus Paul

(56) Entgegenhaltungen:
- WO-A-03/064116
- DE-A1- 10 305 384
- US-A- 5 297 238
- US-A- 5 880 956
- US-B1- 6 321 137
- TSAI R Y ET AL: "A NEW TECHNIQUE FOR FULLY AUTONOMOUS AND EFFICIENT 3D ROBOTICS HAND/EYE CALIBRATION" IEEE TRANSACTIONS ON ROBOTICS AND AUTOMATION, IEEE INC, NEW YORK, US, Bd. 5, Nr. 3, 1. Juni 1989 (1989-06-01), Seiten 345-358, XP000028733 ISSN: 1042-296X
- PUGET P ET AL: "AN OPTIMAL SOLUTION FOR MOBILE CAMERA CALIBRATION" PROCEEDINGS OF THE INTERNATIONAL CONFERENCE ON ROBOTICS AND AUTOMATION. CINCINNATI, MAY 13 - 18, 1990, LOS ALAMITOS, IEEE COMP. SOC. PRESS, US, Bd. VOL. 1, 13. Mai 1990 (1990-05-13), Seiten 34-39, XP000139858 ISBN: 0-8186-9061-5

## Beschreibung

Die Erfindung betrifft ein Verfahren und eine Vorrichtung nach dem Oberbegriff des Anspruchs 1 bzw. des Anspruchs 12.

Die Erfindung bezieht sich insbesondere auf ein Verfahren und eine Vorrichtung zum Bestimmen der Position und der Orientierung einer Bildempfangseinrichtung, die Bilder der realen Umwelt aufnimmt, in die virtuelle Informationen, wie computergenerierte Informationen oder aber separat aufgenommene und gespeicherte Informationen mit eingeblendet werden, wie dies bei der sogenannten "erweiterten Realität" oder Augmented Reality - AR der Fall ist. Position und Orientierung werden bei Handhabungsautomaten und Robotern, die im Rahmen der Erfindung vorzugsweise solche der Norm EN ISO 8373 sind, und auch im folgenden als Pose zusammengefasst. Augmented Reality wird beispielsweise dazu eingesetzt, Arbeitskräfte bei komplizierten Montage- oder Wartungsvorgängen anzuleiten. Darüber hinaus kann Roboterprogrammierung durch Augmented Reality unterstützt werden, wie dies in der deutschen Patentanmeldung 103 05 384.0 beschrieben ist. Insbesondere bei dem letztgenannten Einsatz ist das Schaffen von Augmented Reality durch räumlich präzises Einblenden virtueller Objekte oder Informationen, wie einer Roboterbahn, eines Bezugskoordinatensystems, einer virtuellen oder vorab an einem anderen Ort aufgenommenen Umgebung, virtueller Werkstücke oder dergleichen von größter Wichtigkeit, da die räumliche Lage selbst die wesentlichen Informationen beinhaltet.

Die kontinuierliche exakte Bestimmung der Position und Orientierung (Pose) einer entsprechenden Bildaufnahmevorrichtung ist daher im Rahmen eines Tracking erforderlich. Die Bildaufnahmeinrichtung kann dabei eine Kamera oder aber eine optische Aufnahmeinrichtung sein, wie ein halbdurchlässiger Spiegel oder die Brille eines Betrachters, in die die virtuelle Information eingeblendet wird.

Heute werden zur Bestimmung der Pose einer Kamera häufig Marken, die von der Kamera oder einem angeschlossenen Bildbearbeitungssystem erfasst und erkannt werden können, in der realen Umgebung an räumlich genau definierten Positionen angebracht. Aus der bekannten Position wird über das Kamerabild auf die Pose der Kamera im Raum geschlossen, wie dies in der WO 03/064116 A der Fall ist. Allerdings ist die erzielbare Genauigkeit der Erfassung der Pose durch die optische Qualität der Kamera, die Güte der Kalibrierung der Kamera, die Genauigkeit der Bestimmung der Lage der Marken bzw. deren präzise Anbringung an bekannten Orten in der Welt und die Qualität der Bildverarbeitung eingeschränkt. Es ist sehr aufwendig, in realen Fertigungsumgebungen optische Marken in ausreichender Zahl anzubringen und vor Beginn einer Roboterprogrammierung - manuell - zu vermessen.

Eine Möglichkeit ist das manuelle Teachen einer Bahn, wie es die US 5,880,956 offenbart, wobei das Werkzeug manuell zu bestimmten Punkten gefahren wird und über diese Punkte eine Simulations- und Bewegungssoftware eine Bahn berechnet und dies graphisch darstellt. Eine weitere Vorgehensweise unter Verwendung eines Kalibrationsblocks wird in der Veröffentlichung Tsai et al.: "A new technique for fully autonomous and efficient 3D robotics hand/eye calibration", IEEE Transactions on Robotics and Automation, IEEE Inc., 1989, Seiten 345-358 beschrieben, wobei die Kalibrierung einer Roboter Hand/Auge Koordination durch Berechnung der relativen homogenen Transformation zwischen zwei Koordinatensystemen, eines zentriert in der Kamera, ein zweites zentriert in der Hand, erfolgt.

Wenn ein Modell einer Roboterumgebung existiert, kann in bestimmten Fällen auf das Anbringen von Marken verzichtet werden, da dann die Bestimmung des Ortes der Bildempfangseinrichtung, der Kamera, - das sogenannte Tracking - über den Vergleich von von dem Kamerabild erkannten Umgebungsmerkmalen und in einem Umgebungsmodell hinterlegten Merkmalen erfolgt. Ein derartiges Vorgehen ist einerseits bisher nicht zumindest in einer praxistauglichen Version realisiert und dürfte zum anderen keine hohen Genauigkeiten erzielen.

Weiterhin ist höchst bekannt, die Bestimmung der Pose der Bildempfangseinrichtung über zusätzliche Sensorsysteme mit mechanischen, optischen, akustischen, magnetischen, trägheits- und/oder laserbasierten Sensoren vorzunehmen. Ein solches Vorgehen ist mit hohen Kosten verbunden. Darüber hinaus ist bei mechanischen Sensorsystemen, wie Fadenmesssystemen, der Aktionsbereich des Betrachters stark eingeschränkt. Bei optischen oder akustischen Systemen muss eine direkte Sichtverbindung zwischen Sender und Empfänger gegeben sein, was üblicherweise in realen Fertigungsumgebungen kaum gewährleistet ist. Darüber hinaus ist eine zeitaufwendige Kalibrierung der zusätzlichen Sensorsysteme vor Beginn der Programmierung notwendig, aber kaum praktikabel.

Der Erfindung liegt daher die Aufgabe zugrunde, ein Verfahren und eine Vorrichtung zum Bestimmen der Pose (Position und Orientierung) einer Bildempfangseinrichtung zu schaffen, die bei hoher Genauigkeit der Posen-Bestimmung ohne allzu große Kosten realisierbar ist.

Erfindungsgemäß wird die genannte Aufgabe mit einem Verfahren der eingangs genannten Art mit den kennzeichnenden Merkmalen des Anspruchs 1 gelöst. Eine Vorrichtung der eingangs genannten Art sieht zur Lösung der genannten Aufgabe die kennzeichnenden Merkmale des Anspruchs 12 vor.

Durch die Erfindung wird ermöglicht in Echtzeit, d.h. mindestens mit der Videoaktivrate, die Pose der Kamera in Echtzeit zu ermitteln, wodurch eine einfache und kostengünstige Visualisierung von einer jeweiligen Pose der Kamera zugeordneten Informationen, insbesondere handhabungsautomatinternen Informationen ermöglicht wird.

Zur Erreichung des Ziels einer glaubwürdigen in Echtzeit ablaufenden Augmentierung von Steuerungsinformationen mit Hilfe eines Video See-Through AR Systems ist es notwendig, die Pose einer Kamera schnell zu bestimmen und für einen Betrachter interessante virtuelle Objekte dem eigentlich aufgenommenen Videobild zu überlagern. Das Tracking zur fortlaufenden Bestimmung der Kamerapose wird mittels Winkelenkondern und Kenntnissen über die Vorwärtskinematik desjenigen Roboters erreicht, an dem die Kamera montiert ist. Die zu überlagernden Informationen können von der Robotersteuerung des Kamera haltenden Roboters selber oder aber von anderen Rechnern, die "interessante" Informationen bereithalten könnten (z.B. von anderen Maschinen- oder Robotersteuerungen), kommen. Bei der Visualisierung von aus anderen Steuerungen kommenden Informationen ist es erforderlich, die räumliche Beziehung zwischen den Ursprungskoordinatensystemen der Steuerungen zu kennen bzw. es muss sichergestellt sein, dass alle Steuerungen ihre Informationen bezüglich eines Koordinatensystems (z.B. des Weltkoordinatensystems des Kamera führenden Roboters) bekannt geben. Zur Transformation in das Kamerakoordinatensystem des Kamera führenden Roboters muss die Beziehung zwischen Kamerakoordinatensystem und Flanschkoordinatensystem, z.B. durch Kalibrierung, bekannt sein.

Die robotereigene, in diesen integrierte Messeinrichtung beinhaltet vorzugsweise die Winkelsensoren in den Achsantrieben eines solchen Roboters.

In bevorzugter Ausgestaltung ist die Bildempfangseinrichtung eine Kamera, die entweder auf einem zur Ausführung einer Aufgabe programmierten Handhabungsautomaten oder Roboter angeordnet sein kann, und zwar vorzugsweise beispielsweise an dessen Handflansch oder einem mit diesem verbundenen Werkzeug oder aber auf einem zusätzlich zu dem zur Ausführung einer Aufgabe programmierten Roboter vorhandenen weiteren Roboter.

Während die Bildempfangseinrichtung grundsätzlich ein optisches Sichtgerät sein kann, ist es bevorzugterweise eine (Video-)Kamera. Eine bevorzugte Weiterbildung sieht vor, dass virtuelle Informationen, insbesondere Handhabungsautomat, spezifische, in von der Bildempfangseinrichtung aufgenommenen Bilder zeit- und/oder lagerichtig eingeblendet werden bzw. dass durch eine Einrichtung zum zeit- und/oder lagerichtigen Einblenden virtueller Informationen, insbesondere Handhabungsautomat, spezifische, in von der Bildempfangseinrichtung aufgenommenen Bilder aufweist.

In bevorzugter Weiterbildung der Erfindung kann vorgesehen sein, dass eine Kamera an einem Handhabungsautomaten verwendet wird, der insbesondere zur Ausführung von Aufgaben programmiert ist, dass eine Kamera auf einem einem zur Ausführung von Aufgaben programmierten Handhabungsautomaten benachbarten Handhabungsautomat verwendet wird und/oder dass die Pose einer Bildempfangseinrichtung mittels einer mit einem Handhabungsautomaten verbundenen Messeinrichtung bestimmt wird. Der in der Regel gegebene Offset zwischen Kamera und einem bekannten Ort am Handhabungsgerät, wie einem Handflansch oder TCP, kann in bekannter Weise, beispielsweise durch Vermessen oder aber in der weiter unten gegebenen Weise bestimmt werden.

In weiteren bevorzugten Ausgestaltungen der Erfindung ist vorgesehen, dass die Pose eines Handhabungsautomaten im Raum mittels mindestens einer im Raum angeordneten Marke sowie mindestens einer am Roboter angeordneten Messeinrichtung, wie einer Kamera oder eines Sensors bestimmt wird oder, dass die Pose eines Handhabungsautomaten im Raum mittels mindestens einer am Handhabungsautomaten angeordneten Marke sowie mindestens einer vom Handhabungsautomaten unabhängig angeordneten Messeinrichtung, wie einer Kamera oder mindestens eines Sensors bestimmt wird.

Zur Kalibrierung kann die Kamera so künstliche Marken an verschiedenen Posen bildmäßig aus mehreren Positionen erfassen, wodurch ihre Positionen gegenüber den Marken und hierdurch handhabungsautomateigene Messeinrichtungen bestimmte Positionen des Roboters bzw. genauer des Flanschs oder TCP (Tool Center Point) - auch bei zunächst unbestimmten Offset zwischen Kamera und Flansch oder TCP - der Offset und letztendlich die Position im Raum bestimmt werden kann. Hierzu blickt die vom Roboter - aktiv - bewegte Kamera unter verschiedenen Winkeln auf bestimmte Marken. Aus jeder Messpose lässt sich die Position der Kamera, genauer des Kamerakoordinatensystems, im Raum bestimmen. Über die Kenntnis der Position des Roboterflansches zu diesem Zeitpunkt und die Mittelung über mehrere Messungen lässt sich so der Bezug (Offset) zwischen Kamera- und Flanschkoordinatensystem ermitteln.

Gemäß einer bevorzugten Ausgestaltung der Erfindung ist vorgesehen, dass die Pose eines Handhabungsautomaten relativ zu einem anderen mittels einer auf einem Handhabungsautomaten angeordneten Marke und einer am anderen Handhabungsautomaten angeordneten Messeinrichtung, wie einer Kamera oder eines Sensors bestimmt wird. Erfindungsgemäß bilden Kamera und diese tragender Roboter mit roboterinterner Messeinrichtung sowie AR-Systemkomponenten eine Einheit. Ein zweiter Roboter kann als Teil einer Arbeitszelle betrachtet werden, dessen reale Gegebenheiten mit Informationen aus dieser Arbeitszelle augmentiert werden sollen, z.B. die am zweiten Roboter programmierte Bahn. Dazu ist es erforderlich, dass der erste Roboter weiß, wo er in Bezug zum zweiten Roboter steht. Diese Beziehung kann durch eine Kalibrierung geschehen. Nach erfolgter Kalibrierung ist es für den ersten Roboter ein leichtes, die Daten aus der Robotersteuerung des zweiten Roboters in die Bildkoordinaten seiner Kamera zu transformieren und dem aufgenommenen Bild zu augmentieren.

Die gemäß vorstehendem zu augmentierenden Daten werden von der Steuerung des zweiten Roboters geliefert. Anstelle oder zusätzlich zu diesem zweiten Roboter könnte sich eine Werkzeugmaschine in der Arbeitszelle befinden. Auch Werkzeugmaschinen verfügen über eine Steuerung, und es sind viele Möglichkeiten vorstellbar, Steuerungsinformationen nutzbringend zu visualisieren, z.B. Koordinatensysteme der Maschinensteuerung, virtuell zu bearbeitende Objekte im Rahmen eines Testlaufs, virtuelle Werkzeuge, die realen Werkstücken im Innenraum der Werkzeugmaschine überlagert werden.

Der zweite Roboter, der die Kamera führt, kann im Allgemeinen auf einen anderen Arbeitsraum blicken, in dem viele andere Steuerungen aktiv sein können, z.B. Robotersteuerungen und andere Maschinensteuerungen, deren Informationen visualisiert werden sollen. Im Gegensatz zur Visualisierung im Rahmen von Augmented Reality von roboterinternen Informationen, werden also hier Informationen visualisiert, die von anderen Steuerungen als der eigenen Steuerung stammen. Die Steuerungen müssen dazu - echtzeitfähig - vernetzt sein, damit die Informationen schritthaltend mit den Änderungen in der Wirklichkeit eingeblendet werden können. Weiterhin ist eine Modellbildung der Arbeitszelle erforderlich, die wiederum eine Kalibrierung nach sich zieht, damit glaubwürdig augmentiert werden kann.

Die Kameraführung durch den Roboter kann aktiv oder passiv sein. Aktiv bedeutet, dass der Roboter ein Programm abfährt ("Kamerafahrt" über eine bestimmte Szene hinweg) oder über Sensorik (z.B. die angebrachte Kamera) automatisch positioniert wird. Passiv bedeutet, dass ein Bediener, der die AR-Informationen für seine Zwecke nutzen möchte, den Roboter so positioniert, dass er die gewünschten Informationen bekommt. Diese Positionierung kann durch ein Führen des Roboters erfolgen (im so genannten Manipulatorbetrieb, bei dem z.B. am Roboter ein Kraft-Momenten-Sensor angebracht ist, über den gewünschte Bewegungsrichtungen aufgeprägt werden) oder über das Bedienhandgerät (z.B. durch Drücken der Verfahrtasten oder Betätigen der 6D-Maus).

Eine weitere Besonderheit der Erfindung ist, dass der Roboter eine teils aktive, teils passive Rolle einnehmen kann. Während ein Benutzer den Roboter von Hand führt oder mittels Verfahrtasten bewegt, können die Bewegungsfreiheitsgrade des Roboters beliebig eingeschränkt werden, z.B. auf einen Raum, in dem sich der Roboter mit allen sechs Freiheitsgraden bewegen kann, oder auf eine beliebige Ebene, Bahn oder auch nur einen Punkt, um den herum der TCP orientiert werden kann. So können mit Hilfe des Roboters beliebige Kamerafahrten von Hand parametriert durchgeführt werden, z.B. manuelles Führen des Roboters auf einer fest vorgegebenen Bahn durch den Raum, wobei die Orientierungsfreiheitsgrade frei gegeben sein könnten.

Wird die Kameraführung von einem zweiten Roboter übernommen, der auf den ersten Roboter bzw. auf den vom ersten Roboter bearbeiteten Arbeitsraum blickt, so ist dies eine besondere Ausprägung der Erfindung, bei der ein Roboter eine Kamera aktiv bewegt, um virtuelle Objekte lagerichtig in das Kamerabild einblenden zu können. Die Besonderheit dabei ist, dass sich die beiden Roboter auf dasselbe Koordinatensystem beziehen und über ihre Steuerungen leicht Informationen austauschen können, die für eine Visualisierung wesentlich sind. Die Einblendung der gewünschten roboterinternen Informationen erleichtert sich dadurch. Die Roboter sind hierzu aufeinander kalibriert. Auch können die Roboter kollisionsvermeidend geführt/bewegt werden, wenn die Steuerungen miteinander verbunden sind, was mit herkömmlichen rein mechanisch arbeitenden AR-Trackingsystemen nicht möglich ist. Setzt man gar Robotersysteme mit mehr als sechs Freiheitsgraden ein, so können die redundanten Freiheitsgrade verwendet werden, um Kollisionen und Singularitäten zu umfahren (in die man beim von Hand geführten Roboter sehr leicht hineingerät) und Hindernissen auszuweichen. Die Steuerung des Kamera führenden Roboters könnte über Kollisionsvermeidungsalgorithmen verfügen, die automatisch dafür sorgen, dass der Roboter, während er von Hand geführt wird, nirgendwo kollidiert. Dies ist ein großer Vorteil gegenüber rein passiven Systemen, weil der Benutzer immer dafür sorgen muss, dass das System nicht kollidiert.

Die Kamera kann darüber hinaus auch an einem eine Videoanzeige aufweisenden Bediengerät, das von einem Nutzer getragen wird, angeordnet sein. Insbesondere wenn die Bildempfangseinrichtung von einem Nutzer getragen wird, kann es sich auch um ein optisches Sichtgerät, wie einen halbdurchlässigen Spiegel oder eine von einem Nutzer getragene Brille handeln, in die die virtuellen Daten oder Objekte eingeblendet werden.

In diesen Fällen, in denen der Nutzer die Bildempfangseinrichtung trägt, ist mit einem der vorstehenden genannten Handhabungsautomaten oder Roboter eine (weitere) Messeinrichtung verbunden, die beispielsweise eine Kamera sein kann oder aber auch optische, akustische, oder mechanische Sensoren aufweisen kann, mittels derer die genaue Lage der vom Nutzer getragenen Bildempfangseinrichtung relativ zur mit dem Roboter verbundenen Messeinrichtung bestimmt werden kann, wodurch dann wieder unter zu Hilfenahme der handhabungsautomateigenen Messeinrichtung der Ort der vom Nutzer getragenen Bildempfangseinrichtung im Raum bestimmt werden kann. Vorzugsweise ist die Bildempfangseinrichtung, wenn sie denn separat von einem der Handhabungsautomaten oder Roboter angeordnet ist, mit Marken, wie insbesondere optischen, aber auch akustischen Marken versehen, wobei dann eine entsprechende Messeinrichtung eingesetzt wird.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im einzelnen erläutert sind. Dabei zeigt:
- Fig. 1: eine schematische Darstellung eines mit einer Bilderfassungseinrichtung in Form einer Kamera versehenen, Werkstücke bearbeitenden Roboters;
- Fig. 2: ein Blockschaltbild mit den Komponenten und dem Informationsfluss bei dem Gegenstand der Fig. 1;
- Fig. 3: ein Flussdiagramm zum Ändern von Verfahrbefehlen bei der Positionsbestimmung einer mit einem Roboter verbundenen Kamera;
- Fig. 4: eine schematische Darstellung einer erfindungsgemäßen Vorrichtung mit einem zusätzlich zu einem ein Werkstück bearbeitenden Roboter vorgesehenen weiteren, mit einer Bildempfangseinrichtung versehenen benachbarten Roboter;
- Fig. 5: ein Blockschaltbild zu den Komponenten und den Informationsfluss mit dem Gegenstand der Fig. 4;
- Fig. 6: eine schematische Darstellung eines mit Referenzmarken versehenen Werkstück bearbeitenden Roboters und mit einem zusätzlichen, eine Bilderfassungseinrichtung in Form einer Kamera aufweisenden Roboter;
- Fig. 7: eine schematische Darstellung eines mit einer Messeinrichtung versehenen Werkstück bearbeitenden Roboters sowie ortsfesten Marken;
- Fig. 8: eine schematische Darstellung einer von einem Benutzer getragenen Bildempfangseinrichtung und eines mit einer Messeinrichtung versehenen Roboters; und
- Fig. 9: Blockdiagramm mit den Komponenten des Informationsflusses beim Gegenstand der Fig. 8.

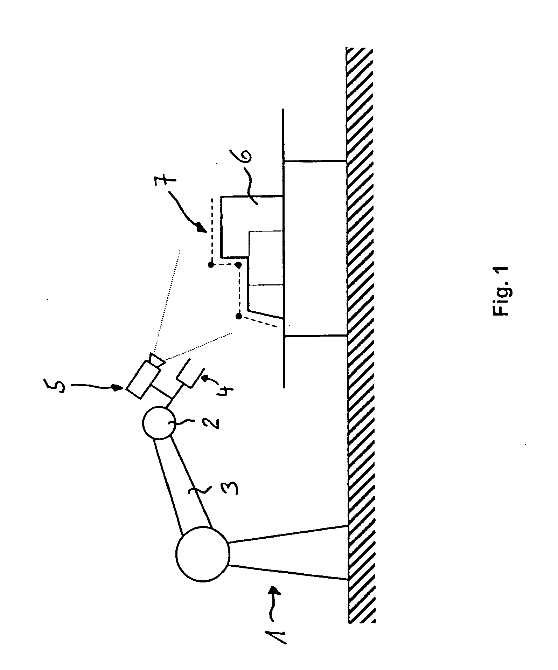

Die Fig. 1 zeigt schematisch repräsentativ für einen Handhabungsautomaten bzw. Roboter einen Mehrachs-Industrie-Roboter 1, der in seinem Handbereich 2 am vorderen Ende seines Roboterarms 3 mit einem Werkzeug 4 versehen ist. Im dargestellten Ausführungsbeispiel ist am Werkzeug 4 eine Bilderfassungseinrichtung 5 in Form einer Kamera angeordnet. Es sind weiterhin Werkstücke 6 dargestellt sowie eine diesen zugeordnete, vom Roboter abzufahrende programmierte Roboterbahn 7.

Nicht dargestellt ist ein einem Bediener oder Nutzer zugeordnetes Sichtgerät mit einer Anzeige des von der Bildempfangseinrichtung 5 aufgenommenen realen Bildes und der Einblendung eines von virtuellen Informationen, insbesondere Bildinformationen in lagerichtiger Zuordnung zum Realbild.

Zum Anzeigen von augmentierten Objekten durch lagerichtiges Einblenden auf der Anzeige muss die Position der Bilderfassungseinrichtung 5 (Kamera) im Raum bekannt sein. Diese kann bei der in der Fig. 1 dargestellten Vorrichtung aufgrund der integrierten robotereigenen Messeinrichtung, wie insbesondere Winkelsensoren der Achsantriebe, mit hoher Präzision bestimmt werden.

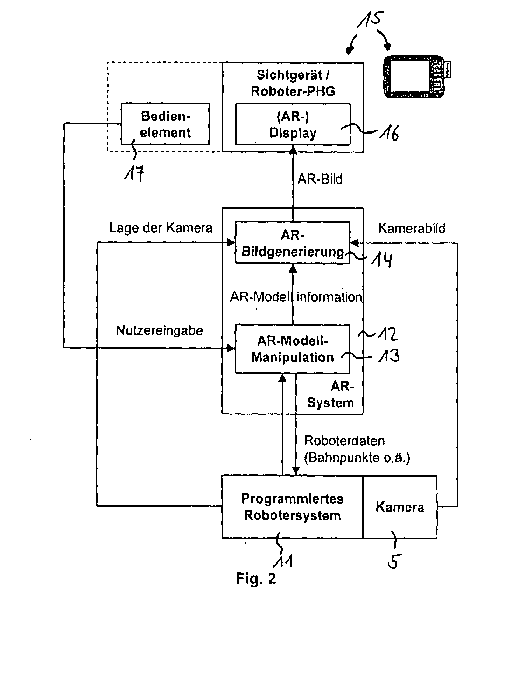

Eine für den Gegenstand der Fig. 1 geeigneten Vorrichtung weist gemäß dem in Fig. 2 dargestellten Blockschaltbild ein den Roboter 1 enthaltendes programmiertes Robotersystem 11 mit der erwähnten Bildaufnahmeeinrichtung 5 in Form der Kamera auf. Es ist weiterhin ein Augmented Reality-System 12 mit einerseits einem Modul zur AR-Modell-Manipulation 13 und andererseits eine AR-Bildgenerierung 14 vorgesehen. Das vom Benutzer gehaltene Sichtgerät 15 weist neben einer Anzeige oder einem Display 16 Bedienelemente 17 auf.

Die in der vorstehenden Weise gewonnene Aussage über Ort und Ausrichtung der Kamera (zusammen als "Pose" bezeichnet) wird von dem programmierten Robotersystem 11 in die Bildgenerierungskomponente 14 des AR-Systems 12 eingeseist, ebenso wie das Kamerabild von der Kamera 5 eingespeist wird. Die zu augmentierenden Objekte, wie beispielsweise Bahnpunkte der abzufahrenden Bahn oder räumliche Positionen von Koordinatensystemen, werden dem AR-System von der Robotersteuerung zur Verfügung gestellt. Das insgesamt generierte AR-Bild (mit realem Bildausschnitt und in diesen eingeblendete augmentierte Informationen) wird für den Benutzer auf dem Display 16 des Sichtgeräts 15 dargestellt. Über die Bedienelemente 17 ist eine räumliche Manipulation der augmentierten Objekte möglich, also beispielsweise ein relatives Verschieben derselben zum realen Bild. Diese Nutzereingaben werden von der AR-Modell-Manipulationskomponente 13 des AR-Systems erfasst und verarbeitet. Die durch Veränderung des augmentierten Objektes diese betreffende manipulierte Information kann bei Bedarf in die Robotersteuerung zurückgeschrieben werden.

Um eine AR-Szene, z.B. die augmentierte Bahn des Roboter-Werkzeug-Zentrums-Punkts (Tool Center Point - TCP) gemäß der Abarbeitung eines Roboterverfahrprogramms, zu betrachten, kann der Benutzer den Roboter 1 manuell so verfahren, dass die Kamera 5 den interessierenden Bildausschnitt darstellt. Eine Kollision kann durch eine automatische Überwachung der Bahn oder aber durch den Benutzer vermieden werden.

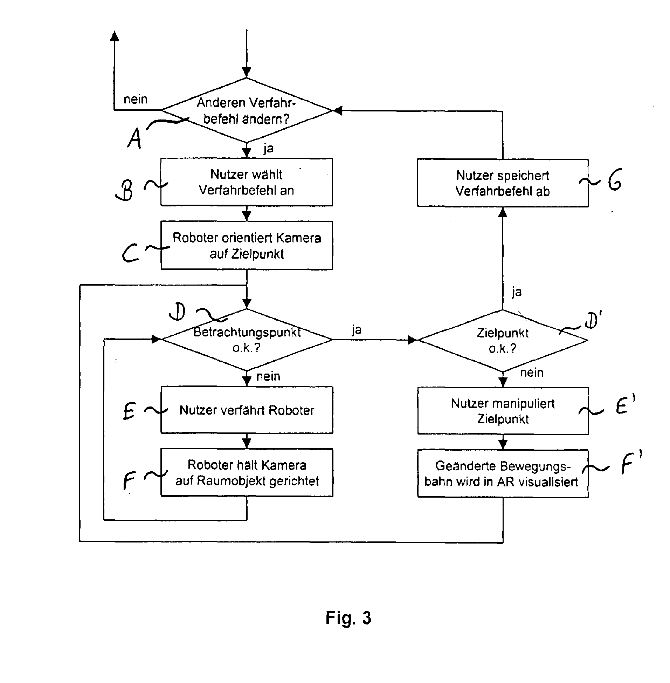

Soll ein Bahnverlauf durch Änderung von Verfahrbefehlen geändert werden (Schritt A in Fig. 3) wählt ein Nutzer ein in der augmentierten Realität zu visualisierendes Objekt, wie einen Bahnpunkt innerhalb des Roboterprogramms, an (Schritt B in Fig. 3). Daraufhin verändert der Roboter 1 zunächst automatisch die Orientierung der Kamera 5 derart, dass das zu visualisierende Objekt, wie der ausgewählte Bahnpunkt, in der Mitte des Bildschirms 16 dargestellt wird. Dabei sollte der Roboter die Kamerapose (Position, Orientierung) so einstellen, dass die Darstellung auf dem Bildschirm 16 mit der Realität übereinstimmt, also "oben" auf dem Bildschirm auch "oben" in der Realität entspricht. Wenn der Betrachtungspunkt dem Benutzer nicht geeignet erscheint (Schritt D), so verfährt der Nutzer, um das augmentierte Objekt aus einer anderen Perspektive zu betrachten, den Roboter manuell, beispielsweise über die entsprechenden Bedienelemente 17 des Roboter-Programmierhandgerät 15 gemäß Schritt E, wobei der Roboter die Kamera auf das Objekt gerichtet hält (Schritt F), bis der Betrachtungspunkt dem Nutzer geeignet erscheint (wiederum Schritt D).

Der Roboter orientiert dabei die Kamera stets so, dass zur Augmentierung ausgewählte Objekt in der Mitte des Bildschirms erscheint. Der Nutzer kann gegebenenfalls die räumliche Position und Orientierung des augmentierten Objekts in bekannter Weise - beispielsweise entsprechend der deutschen Patentanmeldung 103 05 384.0, die im übrigen vollständig zum Gegenstand der Offenbarung dieser Anmeldung gemacht wird - manipulieren und dabei jederzeit den Blickwinkel auf das augmentierte Objekt wie gewünscht ändern.

Hierzu kann wie der Betrachtungspunkt auch der Zielpunkt, wenn er nicht dem gewünschten entspricht, geändert werden (Schritt D'), indem er seitens des Benutzers manipuliert wird (Schritt E') und die geänderte Bewegungsbahn in der augmentierten Realität visualiert wird (Schritt F), wobei gegebenenfalls die Manipulation von Betrachtungspunkt und Zielpunkt wechselweise vorgenommen werden kann. Sind beide in geeigneter Weise eingestellt, so kann der Nutzer den entsprechenden Verfahrbefehl des Roboters abspeichern (Schritt E). Sollen weitere Verfahrbefehle geändert werden, so geschieht dies in der vorstehend beschriebenen Weise oder aber der entsprechende Ablauf ist geändert (Schritt A) .

Durch das vorstehend beschriebene automatisch unterstützte Verfahren wird der Nutzer entlastet, da er nur drei der insgesamt sechs räumlichen Freiheitsgrade selbst steuern muss, nämlich die, die für ihn relevant sind, so das Schwenken der Kamera zum einen in zwei Richtungen sowie den Abstand vom augmentierten Objekt. Das "Zielen" auf das augmentierte Objekt übernimmt der Roboter mit seinen übrigen Freiheitsgraden selbst.

Durch das anhand des vorstehenden Ausführungsbeispiels beschriebene Vorgehen können räumliche Informationen aus der Robotersteuerung effizient visualisiert werden, wie der Bahnverlauf des Tool-Center-Punktes bei der Abarbeitung eines Roboterprogramms oder dergleichen.

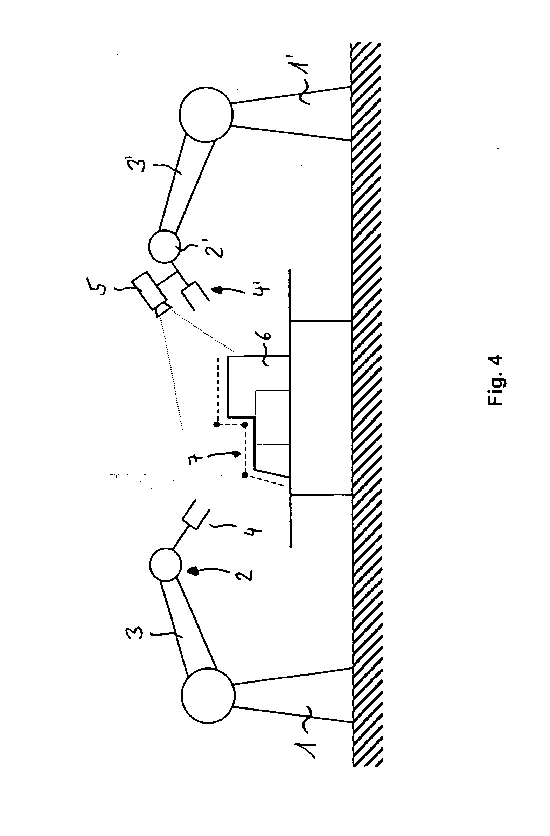

Während bei der Ausgestaltung der erfindungsgemäßen Vorrichtung gemäß Fig. 1 die Bilderfassungseinrichtung in Form einer Kamera auf dem zur Ausführung von Arbeitsschritten programmierten Roboter selbst angeordnet ist, ist bei der Ausgestaltung der Fig. 4 zusätzlich zu diesem ein weiterer Roboter 1' in der Nachbarschaft des erstgenannten Roboters 1 vorgesehen, der die Bilderfassungseinrichtung in Form einer Kamera an einem freien Befestigungsflansch trägt. Neben dem dargestellten weiteren Roboter können auch andere Roboter mit zusätzlichen Bildaufnahmeeinrichtungen vorgesehen sein. Hierdurch lassen sich gewisse Informationen, wie beispielsweise die Pose (Position, Orientierung) des Tool-Center-Points am arbeitenden Roboter selbst besser visualisieren, da die realen Objekte, wie Werkstücke 6, unabhängig von der Pose des arbeitenden Roboters betrachtet werden können. Zur Bestimmung des Abstandes der beiden (oder mehreren) Roboter kann die an einem Roboter befindliche Kamera mitverwendet werden, wenn Abstand und Richtung der Aufstellungsorte der beiden Roboter 1, 1' relativ zueinander bekannt sind, kann wiederum aus den Achswinkeln und den Geometriedaten des kameraführenden Robotersystems und dem Kameraanbringungspunkt auf die Lage der Kamera 5 gegenüber dem arbeitenden Robotersystem zurückgeschlossen werden.

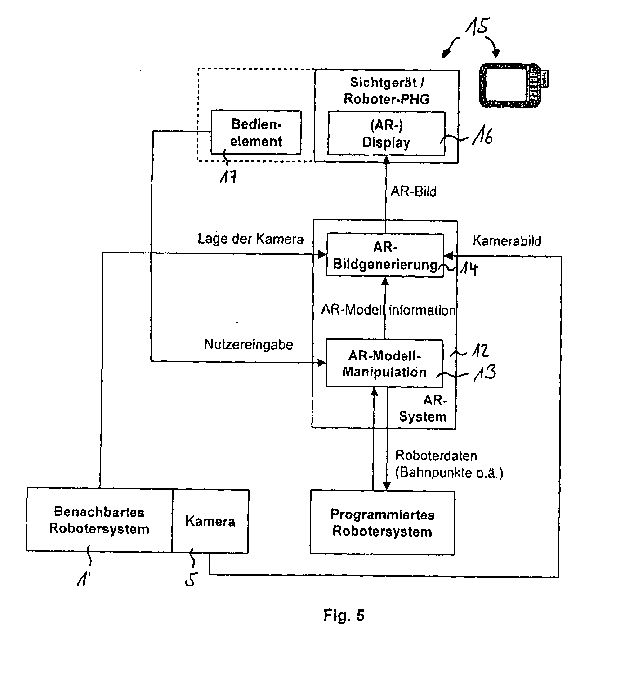

Die Fig. 5 zeigt ein Blockdiagramm zur Vorrichtung der Fig. 3, wobei gleiche Bezugszeichen wie bei der Fig. 2 verwendet sind. Der Unterschied zur Fig. 2 besteht lediglich darin, dass entsprechend der Fig. 4 das zusätzliche Robotersystem 1' vorhanden und dieses mit der Kamera 5 versehen ist sowie von diesem sowohl Lage der Kamera als auch Kamerabild in die AR-Bildgenerierungskomponente des AR-Systems eingespeist werden, dem die zu augmentierenden Informationen, wie die räumliche Position von Koordinatensystemen, Bahnpunkten oder dergleichen, vom arbeitenden Robotersystem 1 zur Verfügung gestellt werden.

Ansonsten stimmt das Blockdiagramm und der Informationsfluss mit dem unter Bezug auf die Fig. 2 beschriebenen überein.

Wie schon erwähnt, lässt sich durch einen zusätzlichen, eine Bilderfassungseinrichtung tragenden Roboter oder mehrere benachbarte Roboter ein deutlich besserer Blickwinkel auf die zu augmentierenden Objekte realisieren, als bei der Ausführungsform der Fig. 1 und 2. Um ein Objekt aus verschiedenen Blickrichtungen zu visualisieren, kann gegebenenfalls zwischen verschiedenen Kamerasichten gewechselt werden. Ein Automatik-unterstützter Betrieb kann in ähnlicher Weise, wie er unter Bezug auf die Fig. 5 beschrieben wurde; realisiert werden, worauf auch für die Ausgestaltung der Fig. 4 und 5 verwiesen werden kann.

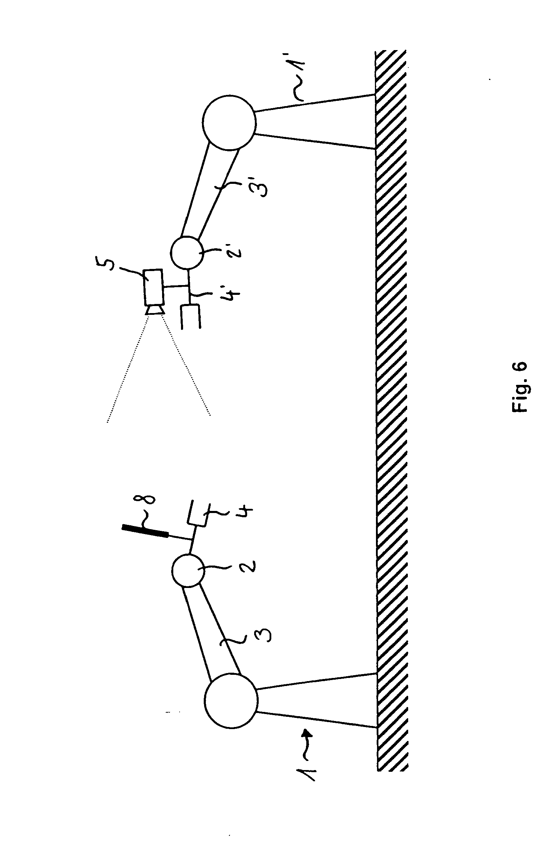

Sind Position und Orientierung der Roboter relativ zueinander nicht bekannt, so ist eine entsprechende Kalibrierung durchzuführen. Zur Veranschaulichung derselben sind die beiden Roboter 1 und 1' wieder in der Fig. 6 dargestellt. Der erste Roboter 1 trägt ein oder mehrere Referenzmarken 8, während der weitere benachbarte Roboter 1' die Kamera 5 trägt. Der letztgenannte Roboter 1' wird so verfahren, dass die Kamera 5 auf die Marke 8 am erstgenannten Roboter 1 zeigt. Aus dem Kamerabild wird mittels bekannter Verfahren die Position der Marke 8 gegenüber der Kamera 5 ermittelt. Aus der bekannten Pose der Marke 8 - aufgrund ihrer bekannten Anordnung am Roboter an der Roboterhand 2 oder einem mit dieser verbundenen Werkzeug 4 und aufgrund der integrierten Messeinrichtungen, wie Winkelsensoren der Achsantriebe, relativ zum Fuß des Roboters 1 und der in entsprechender Weise bekannten Pose der Bilderfassungseinrichtung 5 relativ zum Fuß des benachbarten kameraführenden Roboters 1' lassen sich Position und Orientierung der beiden Roboter 1, 1' relativ zueinander bestimmen. Zur Erhöhung der Genauigkeit kann das Verfahren iterativ bei wechselnden Posen der beiden Robotersysteme 1, 1' durchgeführt werden.

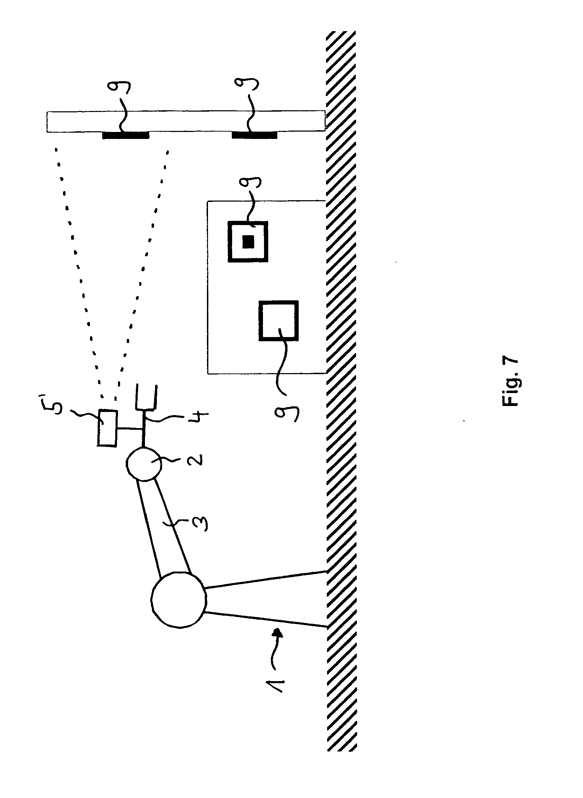

Bei der Ausgestaltung der Fig. 7 wird von der Verwendung von fest im Raum angeordneten Marken 9 zur Bestimmung der Pose einer Bilderfassungseinrichtung der Augmented Reality ausgegangen. Hierzu muss die Pose der einzelnen Marken 9 (Position und Orientierung) im Raum bekannt sein. Diese wird in der aus der Fig. 7 ersichtlichen Weise ebenfalls unter Einsatz der im Roboter integrierten Messeinrichtung, wie den Winkelsensoren der Achsen, bestimmt.

Die Art der Marken 9 kann unterschiedlich sein. Es können, wie in der Fig. 7 skizziert, graphische, optisch erfassbare Abbildungen sein, es können akustische Marken oder sonstige Marken sein. Die Art der Marken bestimmt die am Roboter vorgesehene Messeinrichtung 5'. Bei akustische Marken in Form von Schallwellen kann die Messeinrichtung ein Mikrophon oder ein Mikrophonarray sein. Bei optischen, gegebenenfalls farblich kreierten Marken ist die Messeinrichtung 5' eine Kamera, wobei diese dann mit der zur Erzeugung des augmentierten Bildes am Arbeitsort eingesetzten, also der Kamera 5 der Fig. 1, 3, identisch sein kann. Die Messeinrichtung erfasst die Marken in ihrer Position und Orientierung relativ zur Messeinrichtung selbst. Der Ort der Messeinrichtung wird, wie gesagt, durch die im Roboter integrierte Messeinrichtung (Winkelsensoren) im Raum erfasst, womit auch der Ort der Marken im Raum bestimmt werden kann.

Hierzu kann nach einer Grobpositionierung des Roboters derart, dass eine Marke im Erfassungsbereich der Messeinrichtung liegt, der Roboter die Messeinrichtung systematisch durch den Raum bewegen, während die Messeinrichtung versucht, eine Marke zu erfassen. Ist eine Marke von der Messeinrichtung erfasst, wird ihre Position relativ zur Messeinrichtung bestimmt. Über die Positionsmessung der Winkelmesssysteme in den Roboterachsen und ein geeignetes Robotermodell kann die Position der Messeinrichtung relativ zu einem Bezugspunkt des Roboters, wie dem Fußpunkt des Roboters, bestimmt werden. Durch geeignete Addition der Messergebnisse lässt sich zur Position und Orientierung der Marken im Raum relativ zum Bezugspunkt des Roboters bestimmen. Ist der Aufstellort des Roboters innerhalb eines ortsfesten Koordinatensystems bekannt, kann die Lage der Marken auch relativ zu diesem ortsfesten Koordinatensystem bestimmt werden.

Die Lageerkennung kann bei einer leistungsfähigen Messeinrichtung während der automatischen Suchbewegung bzw. Positionierbewegung bestimmt werden. Alternativ kann der Roboter, nachdem er eine Marke erfasst hat, anhalten, um im ausgeschwungenen Ruhe-Zustand die relative Lagebestimmung der Marken zur Messeinrichtung vorzunehmen. Um die Lagebestimmung im Bereich höchster Genauigkeit der Messeinrichtung vorzunehmen, kann der Roboter, nachdem er eine Marke erfasst hat, durch eine bildbasierte Regelung sich der Marke so näheren, dass eine oder mehrere Messpositionen so angenommen werden, dass eine exakte Lagebestimmung erfolgen kann.

Ist die Position des Roboters innerhalb des Raums unbekannt, kann die Lage der Marken relativ zueinander bestimmt werden, wenn sich der Fußpunkt des Roboters zwischen den einzelnen Messungen der verschiedenen Marken nicht ändert. Derart kann ein Roboter auf einem mobilen Wagen eingesetzt werden, der zum Zwecke der Markenvermessung im Raum arretiert wird. Ist die Reichweite des Roboters unzureichend, kann durch Verschieben des Wagens im Raum ein Überlappen des Messbereichs und damit eine Vermessung der Marken im gesamten Raum erreicht werden.

In bevorzugter Ausgestaltung können verschiedene Messverfahren zur Lagebestimmung miteinander kombiniert werden. Ein Teil der Messeinrichtung kann zur Erkennung von Marken aus größerer Entfernung ausgelegt sein, wie eine Kamera mit Weitwinkelobjektiv, eine andere Messeinrichtung, z.B. ein Infrarot-basierter Entfernungsmesser, kann zur exakten Ausrichtung der Messeinrichtung vor der Marke und Vermessung derselben verwendet werden.

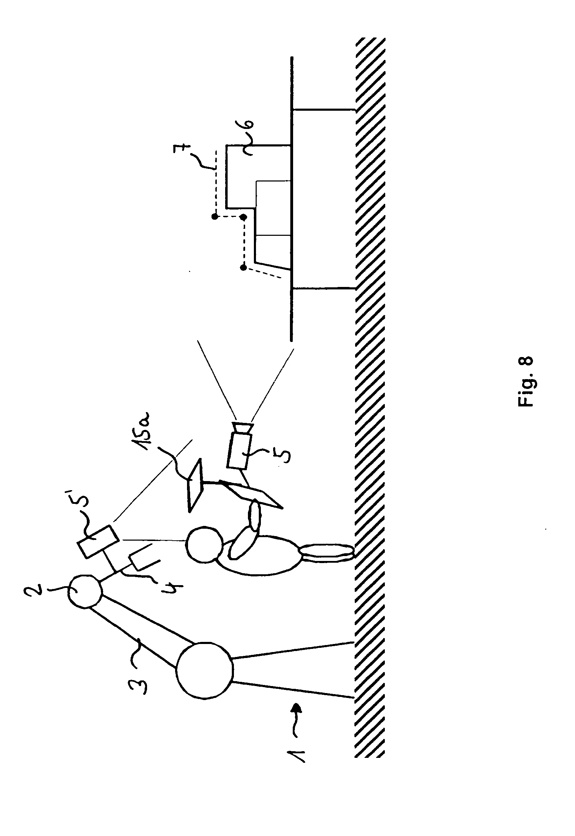

Die Fig. 8 zeigt eine weitere Ausgestaltung der erfindungsgemäßen Vorrichtung. Diese weist ein mit einer Kamera 5 versehenes Bediengerät 15 auf, das von dem Nutzer getragen werden kann. Das Bediengerät weist in der unter Bezug auf Fig. 2 beschriebenen Weise eine Anzeige oder ein Display 16 sowie Bedienelemente 17 auf. Auf der Anzeige 16 wird das von der Kamera 5 aufgenommene Bild zusammen mit den durch das AR-System generierten augmentierten Informationen dargestellt.

Hierdurch kann der Benutzer selbst zusammen mit dem Sichtgerät eine beliebige Position in Bezug auf die zu betrachtende Welt, insbesondere die Werkstücke, einnehmen. Zur korrekten Einblendung von AR-Informationen mussten dann allerdings die Lage des vom Benutzer gehaltenen AR-Sichtgeräts bzw. der hiermit verbundenen Kamera im Raum bekannt sein. Zur Bestimmung derselben trägt der Roboter wiederum eine Messeinrichtung, das, wie unter Bezug auf Fig. 7 beschrieben, die Lage des AR-Sichtgeräts relativ zur Messeinrichtung bestimmen kann. Die Position der Messeinrichtung ist wieder aus dem Positionsmesssystem des Roboters in der beschriebenen Weise bestimmbar. Damit ist auch die Lage des AR-Sichtgeräts im Raum bekannt und die AR-Information kann lagerichtig eingeblendet werden.

Als Messeinrichtungen können die vorstehend unter Bezug auf Fig. 7 beschriebenen eingesetzt werden. Die robotergeführte Messeinrichtung kann automatisch das AR-System bzw. eine daran befestigte Messhilfe, wie eine Referenzmarke 15a, im Raum verfolgen. Während sich der Nutzer mit dem AR-Sichtgerät im Raum bewegt, positioniert der Roboter die Messeinrichtung im Raum dergestalt, dass eine optimale Sicht im Sinne des Messverfahrens auf die zu verfolgende Referenzmarke 15a gegeben ist. Diese Positionierung kann kontinuierlich oder auch diskontinuierlich erfolgen. Ein Modell der Umgebung und/oder weitere am Roboter bzw. der Umgebung angebrachte Sensoren können dem Roboter dabei helfen, Kollisionen mit der Umgebung oder dem Benutzer zu vereiden.

Die Fig. 8 zeigt somit eine besondere Ausprägung eines Roboter-Kamera-Systems als aktiv bewegtes AR-Tracking-System. Die am Roboter angebrachte Kamera liefert Signale an die Robotersteuerung, die den Roboter mitsamt Kamera automatisch so positionieren, dass das vom Bediener gehaltene Bedienhandgerät optimal zu erkennen und zu tracken ist. "Optimal zu erkennen" bedeutet, dass die Position und Orientierung der mit dem Bedienhandgerät verbundenen Kamera bestimmt werden kann. Zur Vereinfachung des Trackingproblems kann am Bedienhandgerät eine gut erkennbare Marke angebracht sein, die von der aktiv mit dem Roboter bewegten Kamera ohne Schwierigkeiten erkannt und über Raum und Zeit getrackt werden kann.

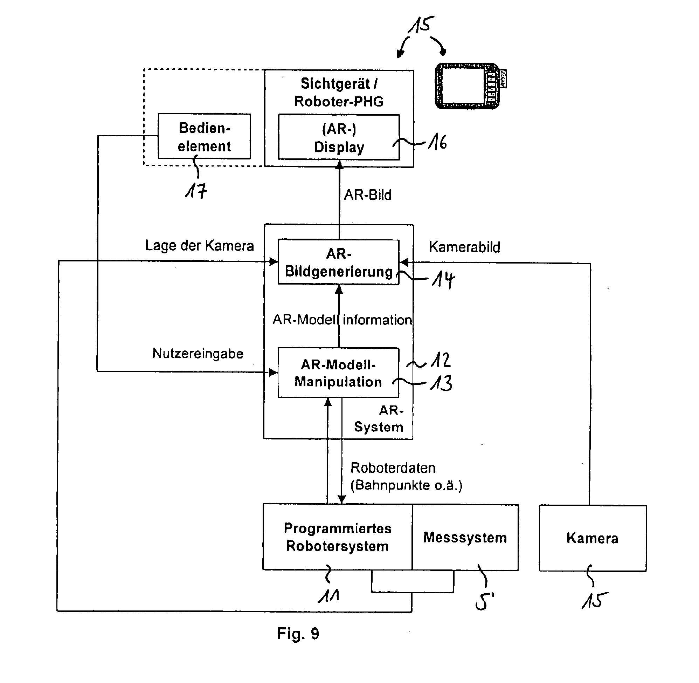

Fig. 9 zeigt ein Blockschaltbild der erfindungsgemäßen Vorrichtung gemäß der Fig. 8. Mit den in den Fig. 2, 5 dargestellten Vorrichtung übereinstimmende Elemente sind mit gleichen Bezugszeichen bezeichnet. Das mit der Kamera aufgenommene Bild wird ebenso wie die durch die Messeinrichtung 5 und das integrierte Messsystem des Roboters 11 bestimmte Lage der Kamera der AR-Bildgenerierungseinrichtung zugeleitet. Ansonsten wird auf die Beschreibung der Fig. 2, 5 verwiesen.

### Bezugszeichenliste

- 1: Mehrachs-Industrie-Roboter
- 1': benachbarter Roboter
- 2: Handbereich
- 3: Roboterarm
- 4: Werkzeug
- 5: Bilderfassungseinrichtung, Kamera
- 5': Messeinrichtung
- 6: Werkstücke
- 7: Roboterbahn
- 8: Referenzmarken
- 9: im Raum angeordnete Marken

- 11: programmiertes Robotersystem
- 12: Augmented Reality-System
- 13: AR-Modell-Manipulation
- 14: AR-Bildgenerierung
- 15: Sichtgerät
- 15a: Referenzmarke
- 16: Display
- 17: Bedienelemente

## Patentansprüche

1. Verfahren zum Bestimmen der Pose als Gesamtheit von Position und Orientierung einer Bildempfangseinrichtung, wobei die Pose der Bildempfangseinrichtung unter Verwendung mindestens einer handhabungsautomateigenen Messeinrichtung bestimmt wird, **dadurch gekennzeichnet, dass** die Pose einer Bildempfangseinrichtung bestimmende, durch mindestens eine handhabungsautomateigene Messeinrichtung gewonnene Posendaten jeweils den in der jeweiligen Pose durch die Bildempfangseinrichtung aufgenommenen Bildern zugeordnet werden.

2. Verfahren nach Anspruch 1, **dadurch gekennzeichnet, dass** die Pose der Bildempfangseinrichtung mittels Winkelsensoren der Achsantriebe eines Roboters bestimmt wird.

3. Verfahren nach einem der vorangehenden Ansprüche, **dadurch gekennzeichnet, dass** virtuelle Informationen, insbesondere Handhabungsautomat, spezifische, in von der Bildempfangseinrichtung aufgenommenen Bilder zeit- und/oder lagerichtig eingeblendet werden.

4. Verfahren nach einem der vorangehenden Ansprüche, **dadurch gekennzeichnet, dass** als Bildempfangseinrichtung ein optisches Sichtgerät verwendet wird.

5. Verfahren nach einem der Ansprüche 1 bis 3, **dadurch gekennzeichnet, dass** als Bildempfangseinrichtung eine Kamera verwendet wird.

6. Verfahren nach Anspruch 5, **dadurch gekennzeichnet, dass** eine Kamera an einem Handhabungsautomaten (5) verwendet wird, der insbesondere zur Ausführung von Aufgaben programmiert ist.

7. Verfahren nach Anspruch 5, **dadurch gekennzeichnet, dass** eine Kamera auf einem zur Ausführung von Aufgaben programmierten Handhabungsautomaten (5) benachbarten Handhabungsautomat verwendet wird.

8. Verfahren nach einem der Ansprüche 1 bis 5, **dadurch gekennzeichnet, dass** die Pose einer Bildempfangseinrichtung mittels einer mit einem Handhabungsautomaten verbundenen Messeinrichtung (5') bestimmt wird.

9. Verfahren nach einem der vorangehenden Ansprüche, **dadurch gekennzeichnet, dass** die Pose eines Handhabungsautomaten (1) im Raum mittels mindestens einer im Raum angeordneten Marke (9) sowie mindestens einer am Roboter angeordneten Messeinrichtung (5, 5'), wie einer Kamera oder eines Sensors bestimmt wird.

10. Verfahren nach einem der Ansprüche 1 bis 8, **dadurch gekennzeichnet, dass** die Pose eines Handhabungsautomaten (1) im Raum mittels mindestens einer am Handhabungsautomaten angeordneten Marke (9) sowie mindestens einer vom Handhabungsautomaten unabhängig angeordneten Messeinrichtung (5, 5'), wie einer Kamera oder mindestens eines Sensors bestimmt wird.

11. Verfahren nach einem der vorangehenden Ansprüche, **dadurch gekennzeichnet, dass** die Pose eines Handhabungsautomaten relativ zu einem anderen mittels einer auf einem Handhabungsautomaten angeordneten Marke (8) und einer am anderen Handhabungsautomaten angeordneten Messeinrichtung (5, 5'), wie einer Kamera oder eines Sensors bestimmt wird.

12. Vorrichtung zum Bestimmen der Pose als Gesamtheit von Position und der Orientierung einer Bildempfangseinrichtung mit einem Handhabungsautomaten mit integrierter, handhabungsautomateigener Messeinrichtung zur Bestimmung der Pose der Bildempfangseinrichtung, **gekennzeichnet durch** eine Zuordnungseinrichtung zum Zuordnen von die Pose einer Bildempfangseinrichtung bestimmende, **durch** mindestens eine handhabungsautomateigene Messeinrichtung gewonnene Posedaten jeweils zu den in der jeweiligen Pose **durch** die Bildempfangseinrichtung aufgenommenen Bildern.

13. Vorrichtung nach Anspruch 12, **gekennzeichnet durch** Einrichtung zum zeit- und/oder lagerichtigen Einblenden virtueller Informationen, insbesondere Handhabungsautomat, spezifische, in von der Bildempfangseinrichtung aufgenommenen Bilder.

14. Vorrichtung nach Anspruch 12 oder 13, **dadurch gekennzeichnet, dass** die handhabungsautomateigene Messeinrichtung in den Roboterachsen integrierte Winkelsensoren aufweist.

15. Vorrichtung nach einem der Ansprüche 12 bis 14, **dadurch gekennzeichnet, dass** die Bildempfangseinrichtung ein optisches Sichtgerät ist.

16. Vorrichtung nach einem der Ansprüche 12 bis 14, **dadurch gekennzeichnet, dass** die Bildempfangseinrichtung eine Kamera ist.

17. Vorrichtung nach Anspruch 15, **dadurch gekennzeichnet, dass** die Kamera auf einem Handhabungsautomat (5) angeordnet ist, der insbesondere zur Ausführung einer Aufgabe programmiert ist.

18. Vorrichtung nach Anspruch 16, **dadurch gekennzeichnet, dass** die Kamera auf einem zu einem zur Ausführung einer Aufgabe programmierten Handhabungsautomat benachbarten Handhabungsautomat angeordnet ist.

19. Vorrichtung nach einem der Ansprüche 12 bis 18, **dadurch gekennzeichnet, dass** auf einem Handhabungsautomat eine Messeinrichtung zur Bestimmung des Ortes und der Position einer vom Handhabungsautomat getrennt angeordneten Bildempfangseinrichtung angeordnet ist.

20. Vorrichtung nach einem der Ansprüche 12 bis 18, **gekennzeichnet durch** feste Marken (9) im Raum sowie eine auf einem Handhabungsautomat angeordnete Messeinrichtung (5, 5'), wie einer Kamera oder eines Sensors, zur Erfassung der Pose des Handhabungsautomaten relativ zu den Marken (9).

21. Vorrichtung nach einem der Ansprüche 12 bis 18, **gekennzeichnet durch** mindestens eine auf einem Handhabungsautomaten (1) angeordneten Marke (9) sowie mindestens eine unabhängig vom Handhabungsautomaten (1) angeordnete Messeinrichtung (5, 5'), wie einer Kamera oder mindestens eines Sensors, zum Empfang der Pose des Handhabungsautomaten (1) im Raum.

22. Vorrichtung nach einem der Ansprüche 12 bis 18, **gekennzeichnet durch** eine auf einem Handhabungsautomaten (1, 1') angeordneten Marke (8) sowie einer auf einem anderen Handhabungsautomaten (1, 1') angeordneten Messeinrichtung (5, 5'), wie einer Kamera oder eines Sensors, zur Bestimmung der Relativposition der beiden Handhabungsautomaten (1, 1').

## Claims

1. Method for determining the pose as the entirety of the position and the orientation of an image reception means, wherein the pose of the image reception means is determined using at least one handling automat measurement device, **characterized in that** pose defining pose data of an image reception means as obtained by at least one handling automat measurement device are respectively assigned in the respective pose to the images recorded by the image reception means.

2. Method according to claim 1, **characterized in that** the pose of the image reception means is determined by angle sensors of the axle drives of a robot.

3. Method according to one of the claims above, **characterized in that** virtual information, in particular automat-for-handling-specific information, is overlaid on the images recorded by the image reception means.

4. Method according to one of the claims above, **characterized in that** as image reception means an optical sight device is used.

5. Method according to one of the claims 1 to 3, **characterized in that** as image reception means a camera is used.

6. Method according to claim 5, **characterized in that** a camera on an automat for handling (5) is used, which is in particular programmed to perfom tasks.

7. Method according to claim 5, **characterized in that** a camera on an automat for handling is used that is adjacent to an automat for handling (5) programmed to perform tasks.

8. Method according to one of the claims 1 to 5, **characterized in that** the pose of an image reception means is determined by a measurement device (5') connected to an automat for handling.

9. Method according to one of the claims above, **characterized in that** the pose of an automat for handling (1) in the space is determined by at least one marker (9) arranged in the space and at least one measurement device (5, 5') arranged on the robot, such as a camera or a sensor.

10. Method according to one of the claims 1 to 8, **characterized in that** the pose of an automat for handling (1) in the space is determined by at least one marker (9) arranged on the automat for handling and at least one measurement device (5, 5') arranged independently of the automat for handling, such as a camera or at least one sensor.

11. Method according to one of the claims above, **characterized in that** the pose of an automat for handling is determined relatively to another one by a marker (8) arranged on an automat for handling and a measurement device (5, 5') arranged on the other automat for handling, such as a camera or a sensor.

12. Device for the determination of the pose as the entirety of position and orientation of an image reception means with an automat for handling with an integrated handling automat measurement device for the determination of the pose of the image reception means, **characterized by** an assigning device to assign pose data that determine the pose of an image reception means that are obtained by at least one handling automat measurement device respectively to the images which are recorded in the respective pose.

13. Device according to claim 12, **characterized by** a device to the time-and/or pose-correctly overlay of virtual information, in particular automat-for-handling-specific information, on the images recorded by the image reception means.

14. Device according to claim 12 or 13, **characterized in that** the handling automat measurement device features angle sensors integrated in the joints of the robot.

15. Device according to one of the claims 12 to 14, **characterized in that** the image reception means is an optical sight device.

16. Device according to one of the claims 12 to 14, **characterized in that** the image reception means is a camera.

17. Device according to claim 15, **characterized in that** the camera is arranged on an automat for handling (5), which is in particular programmed to perform a task.

18. Device according to claim 16, **characterized in that** the camera is arranged on an automat for handling adjacent to an automat for handling programmed to perform a task.

19. Device according to one of the claims 12 to 18, **characterized in that** on an automat for handling a measurement device is arranged to determine the place and the position of an image reception means arranged separately from the automat for handling.

20. Device according to one of the claims 12 to 18, **characterized by** fixed markers (9) in the space and a measurement device (5, 5') arranged on an automat for handling, such as a camera or a sensor, to detect the pose of an automat for handling relatively to the markers (9).

21. Device according to one of the claims 12 to 18, **characterized by** at least one marker (9) arranged on an automat for handling (1) and at least one measurement device (5, 5') arranged independently of the automat for handling (1), such as a camera or at least one sensor, to receive the pose of the automat for handling (1) in the space.

22. Device according to one of the claims 12 to 18, **characterized by** a marker (8) arranged on an automat for handling (1, 1') and a measurement device (5, 5') arranged on a different automat for handling (1, 1'), such as a camera or a sensor, to determine the relative position of the two automates for handling (1, 1').

## Revendications

1. Procédé pour la détermination de la pose d'un récepteur d'images, à savoir la position et l'orientation combinées de celui-ci, la pose du récepteur d'images étant déterminée moyennant l'utilisation d'au moins un dispositif de mesure propre à un robot manipulateur, **caractérisé en ce que** les données de pose, déterminant la pose d'un récepteur d'images et obtenues par ledit au moins dispositif de mesure propre à un robot manipulateur, sont coordonnées respectivement avec les images enregistrées par le récepteur d'images dans la pose respective.

2. Procédé selon la revendication 1, **caractérisé en ce que** la pose du récepteur d'images est déterminée au moyen de capteurs angulaires des systèmes d'entraînement des axes d'un robot.

3. Procédé selon l'une des revendications précédentes, **caractérisé en ce que** des informations virtuelles, en particulier des images spécifiques à un robot manipulateur, enregistrées par le récepteur d'images, sont affichées correctement en temps et/ou correctement en position.

4. Procédé selon l'une quelconque des revendications précédentes, **caractérisé en ce que** le récepteur d'images utilisé est une unité de visualisation optique.

5. Procédé selon l'une quelconque des revendications 1 à 3, **caractérisé en ce que** le récepteur d'images utilisé est une caméra.

6. Procédé selon la revendication 5, **caractérisé en ce qu'**une caméra est utilisée sur un robot manipulateur (5), qui est programmé en particulier pour l'exécution de tâches.

7. Procédé selon la revendication 5, **caractérisé en ce qu'**une caméra est utilisée sur un robot manipulateur, adjacent à un robot manipulateur (5) programmé pour l'exécution de tâches.

8. Procédé selon l'une quelconque des revendications 1 à 5, **caractérisé en ce que** la pose d'un récepteur d'images est déterminée au moyen d'un dispositif de mesure (5'), relié à un robot manipulateur.

9. Procédé selon l'une quelconque des revendications précédentes, **caractérisé en ce que** la pose d'un robot manipulateur (1) dans le local est déterminée au moyen d'au moins un repère (9) agencé dans le local, ainsi qu'au moyen d'au moins un dispositif de mesure (5, 5'), tel qu'une camera ou un capteur, monté sur le robot.

10. Procédé selon l'une quelconque des revendications 1 à 8, **caractérisé en ce que** la pose d'un robot manipulateur (1) dans le local est déterminée au moyen d'au moins un repère (9) agencé sur le robot manipulateur, ainsi qu'au moyen d'au moins un dispositif de mesure (5, 5'), tel qu'une caméra ou un capteur, monté indépendamment du robot manipulateur.

11. Procédé selon l'une quelconque des revendications précédentes, **caractérisé en ce que** la pose d'un robot manipulateur par rapport à un autre est déterminée au moyen d'un repère (8), agencé sur un robot manipulateur, et au moyen d'un dispositif de mesure (5, 5'), tel qu'une camera ou un capteur, monté sur l'autre robot manipulateur.

12. Dispositif pour la détermination de la pose d'un récepteur d'images, à savoir la position et l'orientation combinées de celui-ci, comportant un robot manipulateur avec un dispositif de mesure intégré, propre au robot manipulateur et destiné à déterminer la pose du récepteur d'images, **caractérisé par** un dispositif de classement destiné à coordonner les données de pose, déterminant la pose d'un récepteur d'images et obtenues par ledit au moins dispositif de mesure propre au robot manipulateur, respectivement avec les images enregistrées par le récepteur d'images dans la pose respective.

13. Dispositif selon la revendication 12, **caractérisé par** un dispositif pour l'affichage correctement en temps et/ou correctement en position d'informations virtuelles, en particulier des images spécifiques à un robot manipulateur, enregistrées dans et par le récepteur d'images.

14. Dispositif selon la revendication 12 ou 13, **caractérisé en ce que** le dispositif de mesure, propre à un robot manipulateur, comporte des capteurs angulaires intégrés dans les axes du robot.

15. Dispositif selon l'une quelconque des revendications 12 à 14, **caractérisé en ce que** le récepteur d'images est une unité de visualisation optique.

16. Dispositif selon l'une quelconque des revendications 12 à 14, **caractérisé en ce que** le récepteur d'images est une caméra.

17. Dispositif selon la revendication 15, **caractérisé en ce que** la caméra est montée sur un robot manipulateur (5), qui est programmé en particulier pour l'exécution d'une tâche.

18. Dispositif selon la revendication 16, **caractérisé en ce que** la caméra est montée sur un robot manipulateur, adjacent au robot manipulateur programmé pour l'exécution d'une tâche.

19. Dispositif selon l'une quelconque des revendications 12 à 18, **caractérisé en ce que** sur un robot manipulateur est monté un dispositif de mesure destiné à déterminer le lieu et la position d'un récepteur d'images, monté séparément du robot manipulateur.

20. Dispositif selon l'une quelconque des revendications 12 à 18, **caractérisé par** des repères (9) fixes dans le local, ainsi que par un dispositif de mesure (5, 5'), tel qu'une camera ou un capteur, monté sur un robot et destiné à détecter la pose du robot manipulateur par rapport aux repères (9).

21. Dispositif selon l'une quelconque des revendications 12 à 18, **caractérisé par** au moins un repère (9) agencé sur un robot manipulateur (1), ainsi que par au moins un dispositif de mesure (5, 5'), tel qu'une camera ou au moins un capteur, monté indépendamment du robot manipulateur (1) et destiné à enregistrer la pose du robot manipulateur (1) dans le local.

22. Dispositif selon l'une quelconque des revendications 12 à 18, **caractérisé par** un repère (8), agencé sur un robot manipulateur (1, 1'), ainsi que par un dispositif de mesure (5, 5'), tel qu'une camera ou un capteur, monté sur un autre robot manipulateur (1, 1') et destiné à déterminer la position relative des deux robots manipulateurs (1, 1').
